(19)

Europäisches
Patentamt
European
Patent Office
Office européen
des brevets

(11) **EP 2 899 689 A1**

(12) **EUROPEAN PATENT APPLICATION**

(43) Date of publication:
**29.07.2015 Bulletin 2015/31**

(51) Int Cl.:
***G06T 5/00*** (2006.01)

(21) Application number: **14305096.1**

(22) Date of filing: **23.01.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Newson, Alasdair
35576 Cesson-Sévigné (FR)**

• **Almansa, Andres
75634 Paris Cedex 13 (FR)**
• **Fradet, Matthieu
35576 Cesson-Sévigné (FR)**
• **Gousseau, Yann
75634 Paris Cedex 13 (FR)**
• **Perez, Patrick
35576 Cesson-Sévigné (FR)**

(74) Representative: **Huchet, Anne
Technicolor
1, rue Jeanne d'Arc
92443 Issy-les-Moulineaux Cedex (FR)**

(54) **Method for inpainting a target area in a target video**

(57)    The invention relates to a method for inpainting a target area in a target video. The method comprises determining a multi-resolution representation of the target video, wherein for each resolution a representation comprises a first video representative of the colors of the target video and a second video representative of the textures of the target video; and inpainting the target area in the target video using an information representative of the colors and the textures wherein the information representative of the colors and the textures is obtained, by reconstructing the first video and the second video in the target area for each resolution.

The method also relates to a graphics processing unit and to computer-readable medium for implementing the inpainting method.

FIGURE 1

**Description**

TECHNICAL FIELD

The present invention relates generally to the field of video inpainting. More precisely, the invention relates to a method for inpainting a target area in a target video.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In the digital world, inpainting (also known as image completion or video completion) refers to the application of sophisticated algorithms to replace lost or corrupted parts of the image data. Thus the goal of video inpainting is to fill in a space-time hole (also called an occlusion) in a video with some content in a manner which is visually pleasing. This sort of processing is useful for removing unwanted objects or degradations from videos. Some of the challenges of video inpainting include restituting the correct motion of objects which move into the occlusion, and correctly inpainting video textures. These goals require that temporal consistency be taken into account; it is not sufficient to perform image inpainting on a frame-by-frame basis. Most often, inpainting algorithms take video patches from outside the occlusion and copy them in some fashion into the occlusion. While the goal of reconstructing moving objects is reasonably well dealt with in prior work, there has been no algorithm which reconstructs video textures in the generic context of automatic video inpainting.

Y. Wexler et al. disclose in "Space-Time completion of Video" (IEEE Transactions on Pattern Analysis and Machine Intelligence, Vol. 29, N°. 3, March 2007 page 463) a method for the completion of missing information in video based on local structures. This method discloses an heuristic to optimize a global patch-based energy function wherein the energy is the sum of the distance between each patch of the occlusion and its most similar patch outside the occlusion. The patches used are 3D spatio-temporal patches. The optimization relies on a multi-scale iterative process using spatio-temporal pyramids. However, this method shows poor outcome while reconstructing video textures in the generic context of automatic video inpainting. Indeed, the method determines patch matching according to the color similarity. Thus a patch similar in terms of color is matched even if the texture or structure of patches leads to visual artifacts.

A recent image inpainting algorithm proposed in "Exemplar-Based Image Inpainting Using Multi-scale Graph Cuts" by Liu et al. (IEEE transactions on Image Processing, Vol. 22, N°. 5, May 2013 page 1699) uses the gradient and gradient norm to remove ambiguities concerning structure and texture at the coarsest level of a multi-resolution image pyramid. However, if an error occurs in selection of the most similar patch in terms of color and texture at the coarsest level, the propagation of such erroneous starting conditions also leads to visual artifact. In others words, the inpainting technique does not get out of an erroneous local minima in texture matching. The technical issue of correct texture inpainting therefore remains even while considering texture based distances at the coarsest level.

A method for inpainting an occlusion in video sequences which is well adapted to textures reconstruction is therefore needed.

SUMMARY OF INVENTION

The present invention provides a multi-resolution video inpainting algorithm which is able to deal with video textures correctly.

The invention is directed to a method for inpainting a target area in a target video. The method comprises determining a multi-resolution representation of said target video, wherein for each resolution a representation comprises a first video representative of the colors of the target video and a second video representative of the textures of the target video. The method further comprises inpainting the target area in the target video using an information representative of the colors and the textures wherein the information representative of the colors and the textures is obtained, by reconstructing the first video and the second video in the target area for each resolution.

Advantageously, reconstructing the second video representative of the textures for each resolution although not required for reconstructing the colors in the first video, improves the perceptual quality of the inpainting.

According to an advantageous characteristic, the first video comprises for each pixel a color value, the second video comprises for each pixel a texture features value and, at each resolution, reconstructing the first video and the second video comprises for each current pixel in the target area:

- Determining a patch centered on the current pixel, called centered patch;
- Determining a most similar patch of the centered patch;
- Adding a patch correspondence comprising the most similar patch and the centered patch to a set of patch correspondences;
- Reconstructing a color value for the current pixel by a weighted mean of the color value of collocated pixels in most similar patches corresponding to centered patches containing the current pixel; and
- Reconstructing a texture features value for the current pixel by a weighted mean of the texture features value of collocated pixels in each most similar patches corresponding to centered patches containing the current pixel.

According to various characteristics, either taken alone or in combination:

- for a resolution, a patch is an elementary volume (or window) in space and time;
- the most similar patch is determined, for a resolution, at a spatial and temporal location wherein each pixel of a patch is known;
- determining the most similar patch of the centered patch is based on a patch distance comprising at least an information representative of the texture distance;
- information representative of the texture distance is weighted in the patch distance;
- a texture features value of a pixel of the second video comprises a local average absolute value of the grey-level image gradient;
- the image gradient comprises a gradient in an horizontal or in a vertical direction;
- determining a multi-resolution representation comprises sub-sampling information from the finest resolution to the coarsest resolution; while
- reconstructing the multi-resolution representation comprises recursively up-sampling information from the coarsest resolution to the highest resolution.

In another embodiment, the target video comprises a single image, in other words the method for inpainting a video applies to a method for inpainting an image.

According to another aspect, the invention is directed to a graphics processing unit comprising means for executing code instructions for performing the method previously described.

According to another aspect, the invention is directed to a computer-readable medium storing computer-executable instructions performing all the steps of the method previously described when executed on a computer.

Any characteristic or variant embodiment described for the method is compatible with the device intended to process the disclosed method or the computer-readable medium.

BRIEF DESCRIPTION OF DRAWINGS

Preferred features of the present invention will now be described, by way of non-limiting example, with reference to the accompanying drawings, in which:

Figure 1 illustrates the steps of the method according to an embodiment of the invention ;
Figure 2 illustrates the multi-resolution representation used in an embodiment of the invention ;
Figure 3 illustrates schematically a hardware embodiment of a device adapted for inpainting according to the invention; and
Figure 4 illustrates schematically reconstruction of a pixel value from patch correspondences according to an embodiment of the invention.

DESCRIPTION OF EMBODIMENTS

A salient idea of the patch-based multi-resolution video inpainting is to use texture information to identify where the useful information should come from. This texture information is integrated into the patch distance. However, unlike known methods, this textural information is reconstructed in parallel of the video information for each resolution. The proposed method inpaints by successively looking for the most similar patches of all patches in the hole, and combining them to give an inpainting solution. This is iterated several times for each resolution.

Advantageously, the method used for searching for similar patches here can be chosen freely among the state-of-the-art methods.

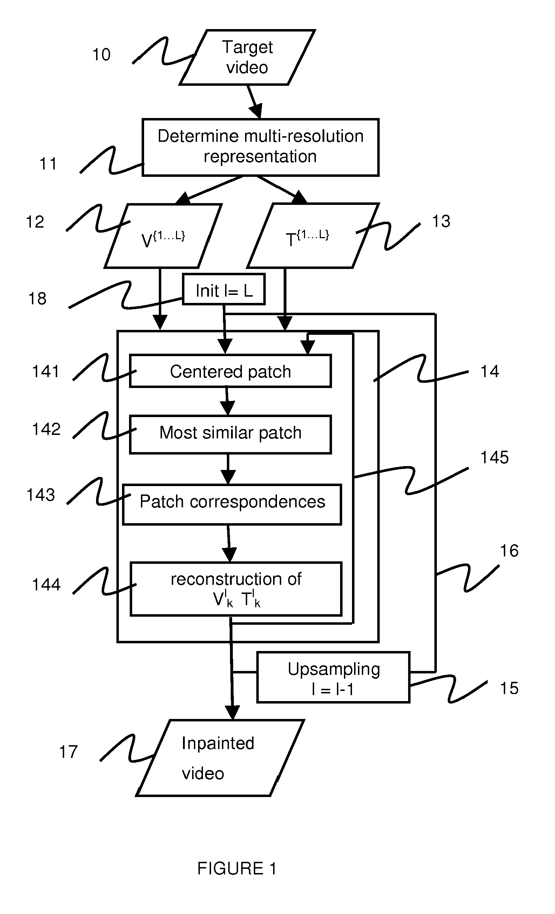

Figure 1 illustrates the steps of the method according to an embodiment of the invention. Given a target video 10, a space-time hole is specified in the sequence. The inpainting method is required to complete this hole using information from the remainder of the target video. Information about the hole, also known by the skilled in the art as an occlusion or an occluded area (wherein the term area refers to a spatial and temporal location in the target video), is provided to the method. Thus the determination of the occlusion is not in the scope of the invention. For instance, the occlusion is manually defined by a user, it can also be the outcome of some segmentation algorithm. The goal of the method is to determine how to fill in the hole. The target video is also called input video or video to inpaint and the different terms are used indifferently in the following of the description. Besides in the description, the following namings are used : a video comprises a temporal sequence of images; each image of a video comprises a set of pixels; a color value is associated with each pixel. The number of pixels in the image defines the spatial resolution of the video. A pixel is identified with 3 coordinates corresponding to its space and time location in the video.

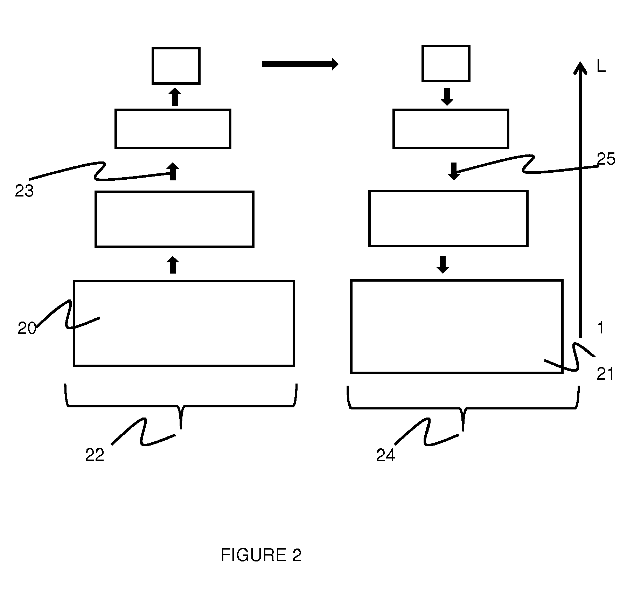

In a first step 11, a multi-resolution representation of the target video is determined. A multi-resolution or multi-scale signal representation comprises at least a video for each resolution/level of the representation, wherein a resolution/level corresponds to a reduced resolution in the spatial or temporal dimensions of the video. According to a preferred embodiment, a resolution/level corresponds to a reduced resolution in the spatial dimensions of the video. However the invention is compatible with a resolution/level corresponding to a reduced resolution in the temporal dimension of the video or in combination of both reduced resolutions in spatial and temporal dimensions. Such multi-resolution representation is also known in the image processing domain as a multi-resolution pyramid. **Figure 2** illustrates a multi-resolution representation 22, 24 used in the disclosed method. In the multi-resolution representation 22, the L pyramid levels, from the finest level l=1, corresponding to the target video 20, to the coarsest level l=L, are obtained by recursively sub-sampling 23 the video at each level. In the multi-resolution representation 24, the L pyramid levels, from the coarsest level l=L to the finest level l=1, corresponding to the inpainted video 21, are obtained by recursively up-sampling 25 the reconstructed video at each level.

Thus, back to figure 1, according to a first characteristic, a Gaussian multi-resolution video pyramid 12 is created from the color pixel value of each image of the target video. Let the first multi-resolution video be noted $V^{\{1...L\}}$, with L the number of pyramid levels. Thus for each level l, a first video $V^{\{l\}}$ representative of the colors of the target video is determined by subsampling video $V^{\{l-1\}}$.

Then according to a second characteristic, a second multi-resolution video pyramid 13 is created which corresponds to texture features in the target video noted $T^{\{1...L\}}$. In a first variant, such texture features are provided to the method at the finest level with the target video and the occlusion information. In a second variant, the method comprises a preliminary step of computing the texture features at the finest pyramid level. Advantageously, such texture features are not limited to one embodiment and a large range of choices is compatible with the inpainting method. For instance, for each pixel in an image of the target video, the texture features value comprises a local estimation of the variance of the textures, or the absolute value of the image gradient (computed on a determined direction such as horizontal direction and/or vertical direction), or the scattering operators as disclosed by J. Bruna in "Classification with Scattering Operators" (in IEEE conference on Computer Vision and Pattern Recognition (CVPR), 2011). Advantageously, these texture features should be as piecewise constant as possible, so as to classify the image into different textural regions. Besides, these regions may then be subsampled safely to coarser resolutions. Once the texture information is calculated at the finest pyramid resolution, it is subsampled for all images to create a second multi-resolution pyramid. Thus for each level l, a second video $T^{\{l\}}$ representative of the texture of the target video is determined.

For simplification reasons, a single pyramid 22 or 24, either illustrating the first video pyramid 12 representative of the colors or the second video pyramid 13 representative of the texture, is represented on **Figure 2.** Pyramid 22 illustrates the L videos obtained by sub-sampling in the determination step while pyramid 24 illustrates the L videos obtained by up-sampling in the reconstruction step. The skilled in the art will appreciate, that the occlusion information is also propagated to each level of representation by sub-sampling. Such occlusion information is, in a non-restrictive embodiment, represented by a mask comprising, for each pixel of video, a binary information corresponding to either occluded pixel or non-occluded pixel. The skilled in the art will also appreciate that neither color values, nor texture features values are available initially inside the occlusion. Accordingly, color values and texture features values are initialized at a determined value for pixels in the occlusion.

According to different variants, each pyramid is constructed in parallel or successively in any order. This reconstructing step 14 is particularly well adapted to pixel-wise massive parallel computing. In the reconstructing step 14, both the first multi-resolution video $V^{\{1...L\}}$ and second multi-resolution video $T^{\{1...L\}}$ are successively and separately reconstructed in the occlusion for each resolution l belonging to [1, L] of the multi-resolution representation. The reconstruction of the color values at the finest level of the pyramid corresponds to the inpainting of the occlusion, thus an inpainted video 17 is obtained. According to a first advantageous characteristic of the invention, the texture features values are also reconstructed. This characteristic improves the identification of the correct areas from which to take color information. Besides this characteristic, by identifying the texture information, further improves the restitution of the moving objects. According an embodiment of the reconstructing, the target video is split in space-time volumes or windows, called patches, and the reconstruction of color/texture features values for a current pixel relies on a correspondence map which indicates the positions of the patches the most similar to a patch centered on the current pixel. A patch thus comprises a set of pixels of the space-time windows.

The sub-steps of the dual reconstruction of pyramids are now described for a current level l. Accordingly, a resolution iteration loop 16 is performed for each pyramid level from the coarsest level to the finest level.

Thus, at a current level l, in a first sub-step 141, for each current pixel p of the occlusion of a video of a spatio-temporally reduced resolution, a patch centered on the current pixel p is determined. $W_p$ denotes a small, fixed-sized window around the pixel p both in space and in time. Thus the patch refers to a location in a video at a current resolution and is independent of the information carried by the video (either representative of color or texture). The size of the window is given as a parameter.

Then in a second sub-step 142, so as to build the correspondence map, a most similar patch $W_q$ of the centered patch $W_p$ is determined. For example, the most similar patch $W_q$ is the window centered around pixel q. A most similar patch $W_q$ is selected among candidate patches where candidate patches are located anywhere in space and time in the video. However, for convergence reasons, a candidate patch should not comprise an unknown pixel being either a pixel in the hole or a pixel out of the image boundaries. The similarity of patches is measured in term of a patch distance. According to a second advantageous characteristic, a texture information is incorporated into the patch distance in order to identify the correct areas from which to take video information. In a variant, the patch distance is therefore the sum of square distances (SSD) between two patches including two texture features. The invention is however not limited to the SSD variant wherein a distance is defined by the sum of square distances, but is compliant with any definition of the distance such as the sum of absolute value (known as L1 norm), the median of square distances or the largest distance between 2 pixels in each patch. $W_p$ and $W_q$ are two patches centered on the pixels p and q. The distance according to the SSD variant $d(W_p,W_q)$ is defined as:

$$d(W_p, W_q) = \sum_{i \in W_p, j \in W_q} \left\| V(i) - V(j) \right\|_2^2 + \alpha \left\| T(i) - T(j) \right\|_2^2$$

Where i and j respectively correspond to pixels belonging to patches $W_p$ and $W_q$ and have the same spatio-temporal location in patches $W_p$ and $W_q$. Advantageously $\alpha$ is a scalar which balances the importance of the texture features. The distance including a texture features information prevents the method from replacing video textures by the smooth regions of the video, thus the method reduces visible visual artefacts. As mentioned before, the textural information is compatible with a wide range of choices.

Then in a third sub-step 143, the correspondence map $\varphi$ is determined. The correspondence map $\varphi^l$ at the level l is a set of patch correspondences, wherein a patch correspondence comprises the most similar patch $W_q$ centered on q and the patch centered on p. Such correspondence map $\varphi^l$ is for example defined as a vector field. Any state of the art method for determining patch correspondences and building a correspondence map is compatible with the invention.

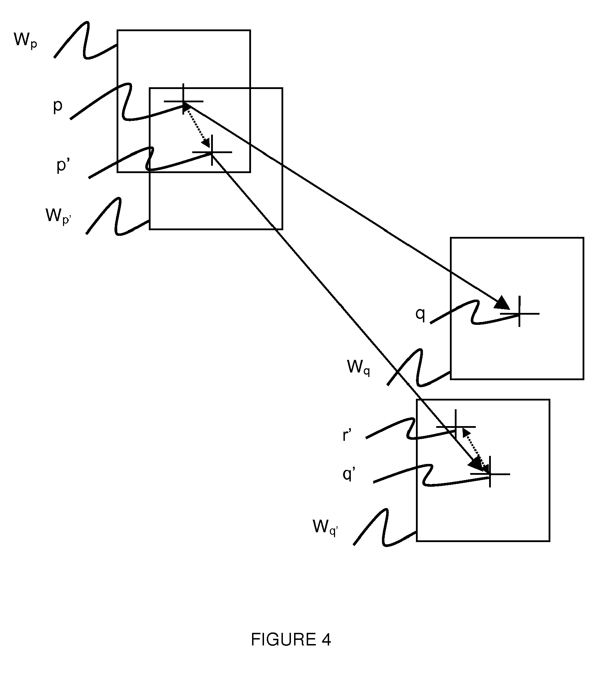

Finally in a fourth sub-step 144, a color value and a texture features value for each pixel p in the occlusion are reconstructed separately using the correspondence map $\varphi$. **Figure 4** illustrates schematically reconstruction of a pixel value from patch correspondences according to an embodiment of the invention. Let us consider all N patches $W_p^n$ containing the current pixel p, this includes $W_p$ centered on current pixel p but also neighbouring patches $W_{p'}$ of $W_p$ which also contain the current pixel p. Then, from the correspondence map $\varphi$, let us consider all the most similar patches $W_q^n$ to all N patches $W_p^n$. As for $W_{p'}$ this includes $W_q$ centered on a pixel q which is the patch the most similar to the patch centered on the current pixel p and patches $W_{q'}$ the most similar to neighbouring patches $W_{p'}$. A value (for color and for texture features) need to be computed from the most similar patches $Wq^n$. Values at pixels $r^n$ in patches $Wq^n$ spatio-temporally collocated with the current pixel p in patches $W_p^n$ are considered. A pixel $r'$ in patch $W_{q'}$ spatio-temporally collocated with pixel p in patch $W_{p'}$ is a pixel whose spatio-temporal location in $W_{q'}$ is the same than the one of p in $W_{p'}$. According to an embodiment, a weighted mean of the color values of collocated pixels $r^n$ in each most similar patch corresponding to a centered patch containing the current pixel p is computed. Besides, a weighted mean of the texture features values of collocated pixels $r^n$ in each most similar patch corresponding to a centered patch containing the pixel p is computed. Each current pixel is iteratively reconstructed from the correspondence map $\varphi$.

According to an advantageous characteristic, the sub-steps 141 to 144 are iteratively processed at a current resolution l until a convergence level is reached. In a variant, the convergence level is defined by an average pixel value change wherein the difference between the values is below a determined threshold. In a complementary variant, the number of iterations K is below a determined threshold for instance 5. At a current iteration $k$, the sub-steps for current resolution l are represented by the following equations :

$$\varphi_{k+1}^1 \leftarrow NearestNeigbourSearch(V_k^1, T_k^1)$$

$$V_{k+1}^1 \leftarrow Reconstruction(V_k^1, \varphi_{k+1}^1)$$

$$T_{k+1}^1 \leftarrow Reconstruction(T_k^1, \varphi_{k+1}^1)$$

Accordingly, a convergence iteration loop 145 is performed at each pyramid level for reconstruction convergence. The skilled in the art will appreciate that only the correspondence map $\varphi^l$ allows linking $V^l$ and $T^l$. The skilled in the art will further appreciate that a convergence iteration loop (comprising sub-steps 141, 142 and 143) may also be implemented for correspondence map convergence according to the state-of-the art methods for determining a correspondence map.

The skilled in the art will also appreciate that neither color values, nor texture features values are available initially inside the occlusion. Accordingly, color values and texture features values are initialized 18 at a determined value for pixels in the occlusion. Advantageously, for first iteration at the coarsest level, an onion-peel approach is adopted consisting in firstly inpainting pixels at the border of the occlusion and progressively inpainting pixels inside the occlusion. One layer of the occlusion is inpainted at a time, each layer being one pixel thick. For each pixel p of the current layer, a patch $W_p$ centered on this current pixel is determined. Its most similar patch $W_q$ is determined using a partial patch comparison, meaning that according to the sum of square differences variant of the patch distance previously defined, the sum is only computed over the pixels of $W_p$ with available color/ texture features values. Then, to reconstruct the color (resp. texture features) value of current pixel p, a weighted mean of the color (resp. texture features) values of pixels $r^n$ collocated with p in each most similar patch corresponding to a patch containing the current pixel p and centered on a pixel with available color (resp. texture features) value is computed.

In a further up-sampling step 15, $V^l$ and $T^l$ at the current resolution I are up-sampled for determining $V^{l-1}$ and $T^{l-1}$ at the next resolution l-1. To that end, the correspondence map $\varphi^l$ is up-sampled from one level I to the successive one l-1. The up-sampled correspondence map $\varphi^{l-1}$ is used to reconstruct $V^{l-1}{}_0$ and $T^{l-1}{}_0$ which are then used as initial pyramid values for the resolution l-1. Thus the multi-resolution representation is recursively reconstructed 14 and up-sampled 15 from the coarsest resolution to the finest resolution for each pyramid level as represented on figure 2. Advantageously the reconstruction of all pyramid levels improves the texture inpainting, since the texture is smoothed at the coarsest level.

The disclosed method has the advantage of being a unified inpainting framework where no segmentation of the video into background, foreground, moving video objects or textured/non textured areas is necessary.

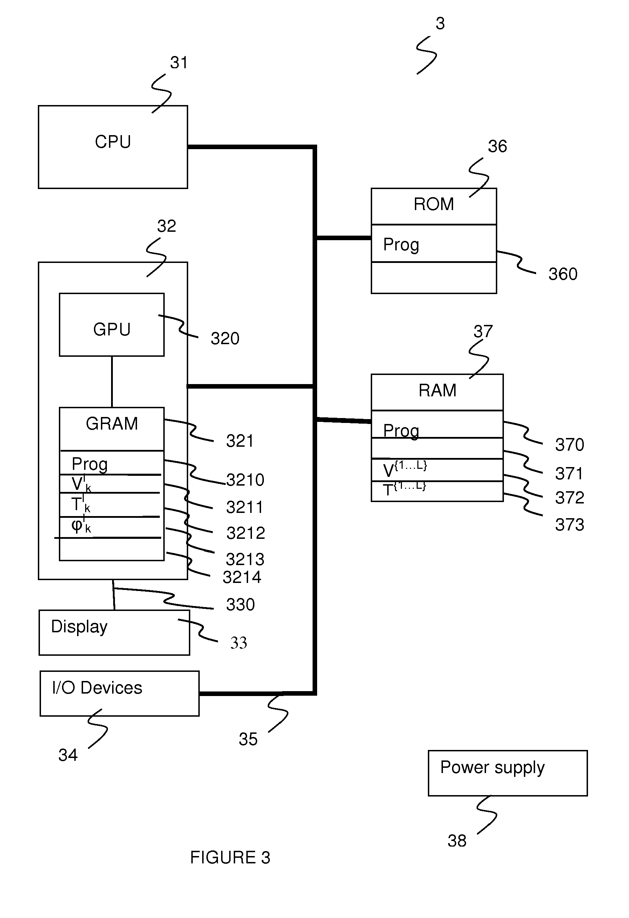

The skilled person will also appreciate that as the method can be implemented quite easily without the need for special equipment by devices such as PCs. According to different variant, features described for the method are being implemented in software module or in hardware module. **Figure 3** illustrates schematically a hardware embodiment of a device 3 adapted for inpainting occlusion in a video. The device 3 corresponds for example to a personal computer, to a laptop, to a game console or to any image processing unit. The device 3 comprises following elements, linked together by an address and data bus 35:

- a microprocessor 31 (or CPU);
- a graphical card 32 comprising:

    o several graphical processing units 320 (GPUs);
    o a graphical random access memory 321;

- a non volatile memory such as ROM (Read Only Memory) 36;
- a RAM (Random Access memory) 37;
- one or several Input/Output (I/O) devices 34, such as for example a keyboard, a mouse, a webcam, and so on;
- a power supply 38.

The device 3 also comprises a display device 33 such as a display screen directly connected to the graphical card 32 for notably displaying the rendering of images computed and composed in the graphical card for example by a video editing tool implementing the inpainting according to the invention. According to a variant, the display device 33 is outside the device 3.

It is noted that the word "register" used in the description of memories 32, 36 and 37 designates in each of the memories mentioned, a memory zone of low capacity (some binary data) as well as a memory zone of large capacity (enabling a whole programme to be stored or all or part of the data representative of computed data or data to be displayed).

When powered up, the microprocessor 31 loads and runs the instructions of the algorithm comprised in RAM 37.

The memory RAM 37 comprises in particular:

- in a register 370, a "prog" program loaded at power up of the device 3;
- data 371 representative of the target video and associated occlusion information;
- data 372 representative of the color multi-resolution pyramid $V^{\{1...L\}}$ of the target video;
- data 373 representative of the texture features multi-resolution pyramid $T^{\{1...L\}}$ of the target video.

The core of the disclosed inpainting method is "embarrassingly parallel", since the calculation of the texture features is done for each pixel independently at the finest pyramid level, and the subsequent subsampling can be easily done in a parallel manner for each coarser level. The reconstruction steps are immediately parallelisable. Thus algorithms implementing the steps of the method of the invention are stored in memory GRAM 321 of the graphical card 32 associated to the device 3 implementing these steps. When powered up and once the data 371 representative of the target video have been loaded in RAM 37, GPUs 320 of the graphical card load these data in GRAM 321 and execute instructions of these algorithms under the form of micro-programs called "shaders" using HLSL language (High Level Shader Language), GLSL language (OpenGL Shading Language) for example.

The memory GRAM 321 comprises in particular data for a current resolution iteration such as:

- in a register 3210, data representative of color $V^l_k$ for a current convergence iteration ;
- in a register 3220, data representative of texture features $T^l_k$ for a current convergence iteration;
- in a register 3220, data representative of a correspondence map $\varphi^l_k$ for a current convergence iteration;

According to a variant, the power supply is outside the device 7.

The invention as described in the preferred embodiments is advantageously computed using a Graphics processing unit (GPU) on a graphics processing board.

The invention is also therefore implemented preferentially as software code instructions and stored on a computer-readable medium such as a memory (flash, SDRAM...), said instructions being read by a graphics processing unit.

The foregoing description of the embodiments of the invention has been presented for the purposes of illustration and description. It is not intended to be exhaustive or to limit the invention to the precise form disclosed. Persons skilled in the relevant art can appreciate that many modifications and variations are possible in light of the above teaching. It is therefore intended that the scope of the invention is not limited by this detailed description, but rather by the claims appended hereto.

**Claims**

1. A method for inpainting a target area in a target video, said method being **characterized in that** the method comprises :

    • Determining a multi-resolution representation of said target video, wherein for each resolution said representation comprises a first video representative of the colors of the target video and a second video representative of the textures of the target video;
    • Inpainting said target area in said target video using an information representative of the colors and the textures wherein the information representative of the colors and the textures is obtained, by reconstructing said first video and said second video in the target area for each resolution.

2. The method of claim 1 wherein said first video comprises for each pixel a color value, wherein said second video comprises for each pixel a texture features value, and wherein, at each resolution, said reconstruction comprises for each current pixel in said target area:

    • Determining a patch centered on said current pixel, called centered patch;
    • Determining a most similar patch of the centered patch;
    • Adding a patch correspondence comprising said most similar patch and said centered patch to a set of patch correspondences;

• Reconstructing a color value for said current pixel by a weighted mean of the color values of collocated pixels in most similar patches corresponding to centered patches containing said current pixel; and reconstructing a texture features value for said current pixel by a weighted mean of the texture features values of collocated pixels in each most similar patches corresponding to centered patches containing said current pixel.

3. The method of claim 2 wherein, for a resolution, said patch is an elementary volume in space and time.

4. The method of any of claims 2 to 3 wherein the most similar patch is determined, for a resolution, at a spatial and temporal location wherein each pixel of a patch is known.

5. The method of any of claims 2 to 4 wherein determining the most similar patch of the centered patch is based on a patch distance comprising at least an information representative of the texture distance.

6. The method of claim 5 wherein said information representative of the texture distance is weighted in said patch distance.

7. The method of any of claims 1 to 6 wherein a texture features value of a pixel of said second video comprises a local average absolute value of the grey-level image gradient.

8. The method of claim 7 wherein the image gradient comprises a gradient in an horizontal or in a vertical direction.

9. The method of any of claims 1 to 8 wherein determining a multi-resolution representation comprises sub-sampling information from the finest resolution to the coarsest resolution.

10. The method of any of claims 1 to 9 wherein said reconstruction comprises recursively up-sampling information from the coarsest resolution to the highest resolution.

11. The method of claim 1 wherein said target video comprises a single image.

12. A graphics processing unit (72) comprising means for executing code instructions for performing the method according to any of claims 1 to 11.

FIGURE 1

FIGURE 2

3

31

## CPU

36

ROM

Prog

360

32

GPU

320

GRAM

321

Prog

3210

$V^i_k$

3211

$T^i_k$

3212

$\varphi^i_k$

3213

3214

37

RAM

Prog

370

$V^{\{1...L\}}$

371

$T^{\{1...L\}}$

372

373

330

Display

33

I/O Devices

34

35

Power supply

38

FIGURE 3

FIGURE 4

Europäisches
Patentamt

European
Patent Office

Office européen
des brevets

## EUROPEAN SEARCH REPORT

Application Number

EP 14 30 5096

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AARTI S DESHMUKH ET AL: "Image inpainting using multiresolution wavelet transform analysis", COMMUNICATION, INFORMATION&COMPUTING TECHNOLOGY (ICCICT), 2012 INTERNATIONAL CONFERENCE ON, IEEE, 19 October 2012 (2012-10-19), pages 1-6, XP032294126, DOI: 10.1109/ICCICT.2012.6398156 ISBN: 978-1-4577-2077-2 * abstract * * page 3 - page 4 * * page 6, column 2 * ----- | 1-12 | INV. G06T5/00 |
| A | ALASDAIR NEWSON ET AL: "Towards fast, generic video inpainting", PROCEEDINGS OF THE 10TH EUROPEAN CONFERENCE ON VISUAL MEDIA PRODUCTION, CVMP '13, 1 January 2013 (2013-01-01), pages 1-8, XP55117708, New York, New York, USA DOI: 10.1145/2534008.2534019 ISBN: 978-1-45-032589-9 * the whole document * ----- | 1-12 | |

TECHNICAL FIELDS SEARCHED (IPC)

G06T

The present search report has been drawn up for all claims

| Place of search | Date of completion of the search | Examiner |
|---|---|---|
| Munich | 20 May 2014 | Millet, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. WEXLER et al.** Space-Time completion of Video. *IEEE Transactions on Pattern Analysis and Machine Intelligence,* March 2007, vol. 29 (3), 463
- **LIU et al.** Exemplar-Based Image Inpainting Using Multi-scale Graph Cuts. *IEEE transactions on Image Processing,* May 2013, vol. 22 (5), 1699

- **J. BRUNA.** Classification with Scattering Operators. *IEEE conference on Computer Vision and Pattern Recognition (CVPR,* 2011